# EUROPEAN PATENT APPLICATION

(11) **EP 4 794 090 A1**
(43) Date of publication of application: **19.08.2026**
(21) Application number: 25822887.3
(22) Date of filing: 24.10.2025
(51) Int. Cl.: H01M 50/296

(54) **BATTERY PACK HAVING MULTIPLE CONTACT POINTS AT POSITIVE AND NEGATIVE TERMINALS**

(30) Priority: 01.11.2024 CN 202411550206; 01.11.2024 CN 202422669757 U
(71) Applicant: Zhejiang UBP New Energy Tech. Co., Ltd, Ningbo, Zhejiang 315100 (CN)
(72) Inventor: ZHANG, Hepeng, Zhejiang 31500 (CN); LIU, Leilei, Zhejiang 31500 (CN); XU, Zhongsheng, Zhejiang 31500 (CN)
(74) Representative: Ullrich & Naumann PartG mbB
(86) International application number: PCT/CN2025/129839
(87) International publication number: WO 2026/092318

(57) **Abstract**

The present application relates to the technical field of new energy batteries, and in particular to a battery pack with multiple contact points for positive and negative terminals, which includes a battery pack housing, chutes are defined on two side walls of the battery pack housing, battery-side contact elements are located in the chutes, ribs for insertion into the chutes are arranged on a device housing of a charging and discharging device, and tool-side contact elements for cooperating with the battery-side contact elements are arranged on the ribs.

## Description

### TECHNICAL FIELD

The present application relates to the technical field of new energy batteries, and particularly relates to a battery pack with multiple contact points for positive and negative terminals.

### BACKGROUND ART

The energy storage density of lithium batteries can reach 460-600 Wh/kg, which is approximately 6-7 times that of traditional lead-acid batteries. Under the same weight or volume, lithium batteries can store more energy. The self-discharge rate of lithium batteries is low, and they can maintain a high level of power even when not used for a long time. Meanwhile, lithium battery supports fast charging, which can greatly reduce charging time and improve usage efficiency. This feature enables lithium battery to have broad application prospects in fields such as electric vehicles and portable devices.

In related technologies, the housing of the charging and discharging device (hereinafter referred to as a device housing) is provided with tool-side contact elements for connecting with the battery pack, and the housing of the battery pack (hereinafter referred to as a battery pack housing) is provided with battery-side contact elements on the top side for cooperating with the tool-side contact elements. When the battery pack is connected to the charging and discharging device, the tool-side contact elements are inserted into the battery-side contact elements to form a closed circuit, thereby realizing charging/discharging of the battery pack.

Regarding the above related technologies, since the battery-side contact elements of the battery pack are arranged on the top side of the outer shell, such appearance limitations and structural limitations result in the tool-side contact elements on the device housing being in a state of single-point contact with the female pole pieces on the battery pack housing. In the case of a small contact area, on the one hand, the battery pack may not be able to match high-power charging and discharging devices, and on the other hand, the charging and discharging stability of the battery pack is poor.

### SUMMARY

In order to improve the problem of small contact area between the contact pieces on the charging and discharging device and the pole pieces and signal terminals on the battery pack, and improve the power supply power and power supply stability of the battery pack, the present application provides a battery pack with multiple contact points for positive and negative terminals.

The battery pack with multiple contact points for positive and negative terminals provided by the present application adopts the following technical solutions:

a battery pack with multiple contact points for positive and negative terminals, which includes a battery pack housing and battery-side contact elements, chutes are defined on two side walls of the battery pack housing, and the battery-side contact elements are located in the chutes.

By adopting the above technical solution, since the battery-side contact elements are located in the chutes, when the tool-side contact elements of the charging and discharging device are connected to the battery pack, multiple-point contact can be formed along the direction of the chutes instead of single-point contact, thereby increasing the contact area, which helps to improve current transmission efficiency and increase the power supply power of the battery pack. A larger contact area means more stable current transmission, reducing voltage fluctuations and power loss caused by poor contact, making the battery pack more stable during charging and discharging, and prolonging the service life of the battery pack and the charging and discharging device. The traditional single-point contact method cannot withstand the high current brought by high-power charging and discharging devices, while multiple-point contact can effectively disperse the current, improve the compatibility of the battery pack, enable the battery pack to be applicable to a wider range of charging and discharging devices, and improve its versatility and practicability.

Further, ribs for insertion into the chutes are arranged on a device housing of a charging and discharging device, and tool-side contact elements for cooperating with the battery-side contact elements are arranged on the ribs.

By adopting the above technical solution, the insertion arrangement of the ribs and the chutes makes the connection process between the charging and discharging device and the battery pack more simple and quick. It is only necessary to align the ribs with the chutes and insert them, without complex alignment or adjustment, improving the convenience of use. After the ribs are inserted into the chutes, they provide additional physical support for the connection between the charging and discharging device and the battery pack, enhance the stability of the connection, reduce problems of poor contact or disconnection caused by unstable connection, and improve the overall reliability of the system. The tool-side contact elements on the ribs and the battery-side contact elements in the chutes can form multiple-point contact, further increasing the contact area. Multiple-point contact not only improves current transmission efficiency, but also ensures uniform distribution of current on the contact surface, reducing the risk of local overheating and wear.

Further, a printed circuit board (PCB) for mounting the battery-side contact elements is arranged in the battery pack housing, the battery-side contact elements include positive terminals and negative terminals symmetrically arranged on two sides of the PCB, and a plurality of contact points for abutting against the tool-side contact elements are arranged on both the positive terminals and the negative terminals.

By adopting the above technical solution, a plurality of contact points are arranged on the positive terminals and the negative terminals to form multiple-point contact with the tool-side contact elements, further enhancing the reliability of electrical connection. This arrangement can ensure that even if some contact points fail, other contact points can still maintain stable electrical connection, thereby avoiding failure of the entire charging and discharging system. As the basis of electrical connection, the PCB has excellent conductivity and stability, which can ensure more reliable electrical connection between battery-side contact elements. Integrating the battery-side contact elements (including positive terminals and negative terminals) on the PCB improves the compactness and integration of the internal structure of the battery pack, makes the entire battery pack more modular and standardized, facilitates production, assembly and maintenance, and reduces manufacturing cost and complexity. Since the battery-side contact elements on the PCB can be flexibly set and adjusted, this arrangement has strong adaptability and scalability. The number and positions of contact points can be adjusted according to different charging and discharging requirements and device specifications, or additional electrical components and functional modules can be added.

Further, the positive terminals and the negative terminals are both vertically fixedly connected to the PCB, each of the contact points is arranged at intervals in a length direction of the positive terminals and the negative terminals, and each of the contact points is arranged toward an outer side of the battery pack housing;
a plurality of terminal slots are respectively defined at the two sides of the battery pack housing on opposite inner walls of the two chutes, the terminal slots are arranged in one-to-one correspondence with each of the contact points and all communicate with an interior of the battery pack housing, and each of the contact points on the positive terminals and the negative terminals extends and protrudes from each of the terminal slots; and
the two tool-side contact elements are respectively arranged in a length direction of the two ribs and respectively abut against each of the contact points on the positive terminals and the negative terminals.

By adopting the above technical solution, the positive terminals and negative terminals are vertically fixed on the PCB, and the contact points are arranged at intervals in the length direction of the positive terminals/negative terminals, which increases the contact area, helps to disperse current, and reduces the risk of single-point overload. The terminal slots allow the contact points to be exposed in an orderly and neat manner. The contact points are arranged outward and protrude from the terminal slots, so they can form closer and more stable contact with the tool-side contact elements. During charging and discharging, even if subjected to a certain external force or vibration, the contact points can still maintain good contact with the tool-side contact elements, thereby ensuring the stability of electrical connection. The two tool-side contact elements are respectively arranged in the length direction of the rib and abut against each contact point on the positive terminal and the negative terminal; ribs and tool-side contact elements of different lengths can flexibly match and dock with the contact points on the battery pack, enabling the battery pack to adapt to charging and discharging devices of various specifications and models.

Further, the ribs are defined with mounting slots for embedding the tool-side contact elements, and a side of the tool-side contact elements close to the positive terminals/the negative terminals is flush with the ribs for abutting against each of the contact points on the positive terminals/the negative terminals.

By adopting the above technical solution, the tool-side contact elements are embedded into the mounting slots of the ribs to form a stable mechanical connection, making the tool-side contact elements not easy to loosen or fall off during charging and discharging, and improving the stability of the connection. The tool-side contact elements are flush with the ribs, enabling them to maintain high precision when abutting against the contact points on the positive terminal or the negative terminal, improving charging and discharging efficiency, and reducing heat and wear caused by poor contact.

Further, the positive terminals and the negative terminals are both arranged in a flat manner and fixedly connected to the PCB, each of the contact points is arranged at intervals in the length direction of the positive terminals and the negative terminals, and the contact points on the positive terminals and the negative terminals are all arranged toward one side of the device housing;
a plurality of terminal slots communicating with the interior of the battery pack housing are respectively defined at the two sides of the battery pack housing with in the two chutes, each of the terminal slots is arranged in one-to-one correspondence with each of the contact points, and each of the contact points on the positive terminals and the negative terminals extends and protrudes from each of the terminal slots; and
the two tool-side contact elements are respectively arranged in the length direction of the two ribs and respectively abut against each of the contact points on the positive terminals and the negative terminals.

By adopting the above technical solution, the flatly arranged positive terminal and negative terminal as well as the spacedly arranged contact point optimize the internal layout of the battery pack, making space utilization more efficient, not only reducing the occupied space, but also improving the density and efficiency of electrical connections. All contact points face one side of the device housing and form face-to-face contact with the tool-side contact elements, which helps to ensure the consistency and stability of contact. During charging and discharging, the contact points can be uniformly stressed, reducing electrical failures caused by poor contact or uneven force.

Further, the ribs are defined with mounting slots for mounting the tool-side contact elements on a side close to the battery pack housing.

By adopting the above technical solution, the mounting slots enable the tool-side contact elements to be more stably mounted on the ribs, reducing the risk of loosening or falling off due to vibration or external force, and helping to improve the reliability of the connection between the battery pack and the charging and discharging device. The mounting slots provide precise positioning and guidance for the tool-side contact elements, so that during docking of the battery pack and the charging and discharging device, the tool-side contact elements can accurately abut against the contact points on the battery pack housing.

Further, the PCB is provided with a signal terminal, and the battery pack housing is defined with a through hole for the signal terminal to extend;
the device housing is provided with an identification insert for cooperating with the signal terminal.

By adopting the above technical solution, the setting of signal terminals enables the battery pack to support identity verification and authorization of the charging and discharging device, ensuring that only legitimate devices can connect with the battery pack and perform charging and discharging operations. The signal terminals can also enable two-way communication between the battery pack and the device, which can not only transmit status information, power data, etc. during charging and discharging, but also support more complex control commands and fault diagnosis functions, enhancing the interactivity and intelligence level between the battery pack and the device. The signal terminals also enable the battery pack to have stronger scalability. More signal terminals can be added as needed to support more functions and protocols to adapt to application requirements in different fields and scenarios.

In summary, the present application includes at least one of the following beneficial technical effects:
1.Through the cooperative arrangement of the chutes and ribs, and the stable mechanical connection of the tool-side contact elements embedded in the rib mounting slots, the connection between the battery pack and the charging and discharging device is more stable and not easy to loosen or fall off due to external force or vibration. By arranging multiple contact points on the battery-side contact elements to form multiple-point contact with the tool-side contact elements, even if some contact points fail, other contact points can still maintain stable electrical connection. Integrating the battery-side contact elements on the PCB not only improves the compactness and integration of the internal structure of the battery pack, but also ensures the reliability of electrical connection through the excellent conductivity and stability of the PCB;
2.The cooperative arrangement of the chutes and ribs simplifies the connection process between the battery pack and the charging and discharging device, making the operation faster and more convenient. By adjusting the number and positions of contact points, or adding additional electrical components and functional modules, this arrangement can flexibly adapt to different charging and discharging requirements and device specifications;
3.The arrangement of the signal terminals enables the battery pack to support identity verification and authorization of the charging and discharging device, ensuring that only legitimate devices can connect and perform charging and discharging operations. At the same time, two-way communication is realized to support transmission of status information, power data, as well as complex control instructions and fault diagnosis functions, enhancing the interactivity and intelligence level between devices. The two signal terminals not only meet current application requirements but also reserve sufficient expansion space. More signal terminals can be added as needed to support more functions and protocols, adapting to application requirements in different fields and scenarios.

### BRIEF DESCRIPTION OF THE DRAWINGS

FIG. 1 is an exploded structural schematic diagram I of a battery pack with multiple contact points for positive and negative terminals in Embodiment 1 of the present application.
FIG. 2 is an exploded structural schematic diagram II of the battery pack with multiple contact points for positive and negative terminals in Embodiment 1 of the present application.
FIG. 3 is a sectional structural schematic diagram of the battery pack with multiple contact points for positive and negative terminals in Embodiment 1 of the present application.
FIG. 4 is an exploded structural schematic diagram I of a battery pack with multiple contact points for positive and negative terminals in Embodiment 2 of the present application.
FIG. 5 is an exploded structural schematic diagram II of the battery pack with multiple contact points for positive and negative terminals in Embodiment 2 of the present application.
FIG. 6 is a sectional structural schematic diagram of the battery pack with multiple contact points for positive and negative terminals in Embodiment 2 of the present application.

Listing of reference signs: 1. Device housing; 11. Rib; 12. Mounting slot; 13. Identification insert; 2. Battery pack housing; 21. Chute; 22. Terminal slot; 23. Through hole; 3. PCB; 4. Battery-side contact element; 41. Positive terminal; 411. Contact point; 42. Negative terminal; 5. Tool-side contact element; 6. Signal terminal.

### DETAILED DESCRIPTION

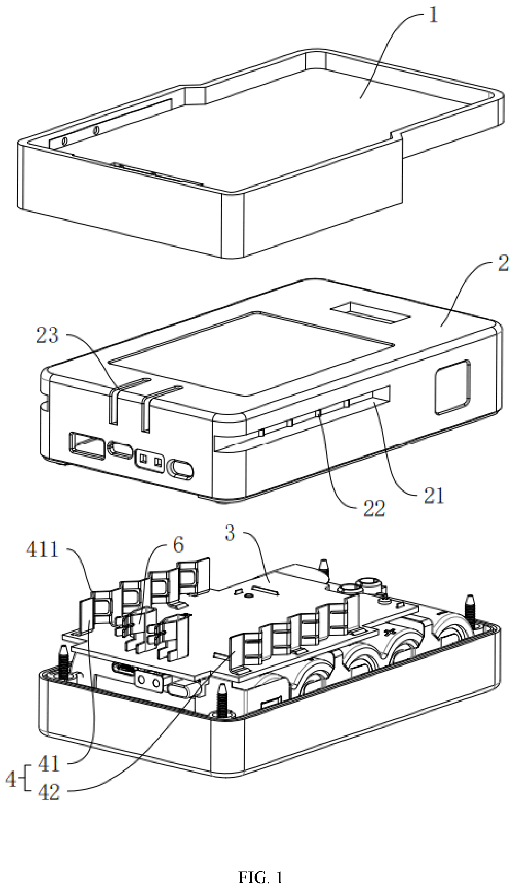

In order to make the objectives, technical solutions and advantages of the present application clearer, the present application will be described in further detail below with reference to Embodiment 1, Embodiment 2 and FIGS. 1-6.

### Embodiment 1

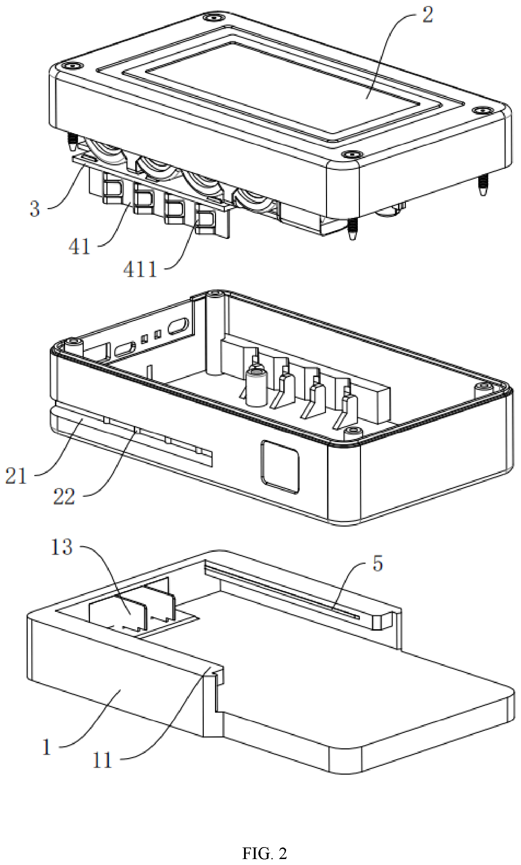

The present embodiment of the present application discloses a battery pack with multiple contact points for positive and negative terminals. A charging and discharging device includes a charging device and a discharging device, wherein the discharging device needs to be supplied with electrical energy by the battery pack, and the charging device can supplement electrical energy for the battery. Referring to FIGS. 1 and 2, the charging and discharging device has a device housing 1, and the battery pack includes a battery pack housing 2 and a PCB 3 arranged inside the battery pack housing 2. The PCB 3 is symmetrically and fixedly connected with two battery-side contact elements 4 on two sides, one of which is a positive terminal 41 and the other one is a negative terminal 42. Both the positive terminal 41 and the negative terminal 42 are vertically and fixedly connected to the PCB 3 and symmetrically arranged on two sides of the PCB 3.

The device housing 1 is symmetrically and integrally connected with two ribs 11 on two opposite inner walls, and the battery pack housing 2 is symmetrically defined with two chutes 21 on two sides for the ribs 11 to insert and slide. In the present embodiment, the device housing 1 is provided with two tool-side contact elements 5 in a length direction on the opposite side surfaces of the two ribs 11, and the two tool-side contact elements 5 are respectively configured to abut against the positive terminal 41 and the negative terminal 42.

In the present embodiment, both the positive terminal 41 and the negative terminal 42 have multiple bending arrangements, and a plurality of spaced contact points 411 are respectively formed at each bending position of the positive terminal 41 and the negative terminal 42. Each contact point 411 on the positive terminal 41 and the negative terminal 42 is arranged toward an outer side of the battery pack housing, so as to abut against the corresponding tool-side contact element 5.

The battery pack housing 2 is defined with a number of terminal slots 22 on two opposite side walls of the two chutes 21. Each terminal slot 22 is arranged at intervals and communicates with an interior of the battery pack housing 2. Each contact point 411 on the positive terminal 41 and the negative terminal 42 extends and protrudes from each terminal slot 22 in a one-to-one correspondence.

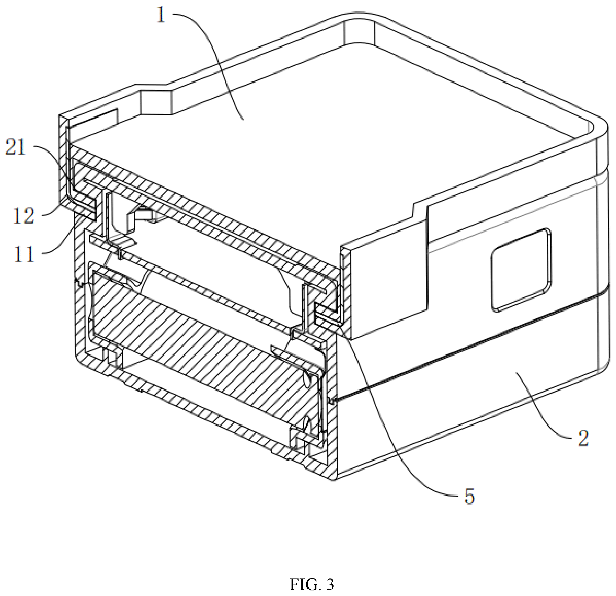

Referring to FIG. 3, the two ribs 11 are respectively defined with mounting slots 12 for embedding the tool-side contact elements 5, and the tool-side contact elements 5 are installed in the ribs 11 through the mounting slots 12 and fixedly connected to the ribs 11. A side of the tool-side contact element 5 close to the battery-side contact element 4 is flush with the rib 11, so as to be able to abut against the battery-side contact element 4.

Combining FIGS. 1 and 2, in the present embodiment, the PCB 3 is further provided with two signal terminals 6 arranged at intervals between the positive terminal 41 and the negative terminal 42. Both signal terminals 6 are vertically and fixedly connected to the PCB 3, and the battery pack housing 2 is defined with through holes 23 for the two signal terminals 6 to extend respectively. The device housing 1 is provided with two identification inserts 13, and the two identification inserts 13 are respectively configured to contact the signal terminals 6.

The implementation principle of the battery pack with multiple contact points for positive and negative terminals in the present embodiment of the present application is as follows: the two ribs 11 of the device housing 1 play a role in positioning and fixing the battery pack housing 2. The mounting slots 12 are defined on the ribs 11 for inserting and fixing the tool-side contact element 5. The PCB 3 is installed inside the battery pack housing 2, and battery-side contact elements 4 (including the positive terminal 41 and the negative terminal 42) are symmetrically fixed on two sides of the PCB 3. The contact points 411 of the battery-side contact element 4 are arranged toward the outer side of the battery pack housing 2. The tool-side contact elements 5 are located on the opposite side surfaces of the two ribs 11 of the device housing 1, arranged in the length direction, and configured to abut against each contact point 411 of the positive terminal 41 and the negative terminal 42 to realize electrical connection. The battery pack housing 2 is installed in cooperation with the ribs 11 of the device housing 1 through the chutes 21 defined on two sides thereof to realize preliminary positioning. Each contact point 411 on the battery-side contact element 4 (including the positive terminal 41 and the negative terminal 42) of the battery pack housing 2 abuts against the tool-side contact element 5 on the rib 11, thereby realizing stable and efficient multi-contact electrical connection between the battery pack and the electrical equipment. At the same time, the two identification inserts 13 on the device housing 1 are inserted into the through holes 23 in a one-to-one correspondence and contact the signal terminals 6, enabling the battery pack to support identity verification and authorization of the charging and discharging device, ensuring that only legitimate devices can connect and perform charging and discharging operations.

### Embodiment 2

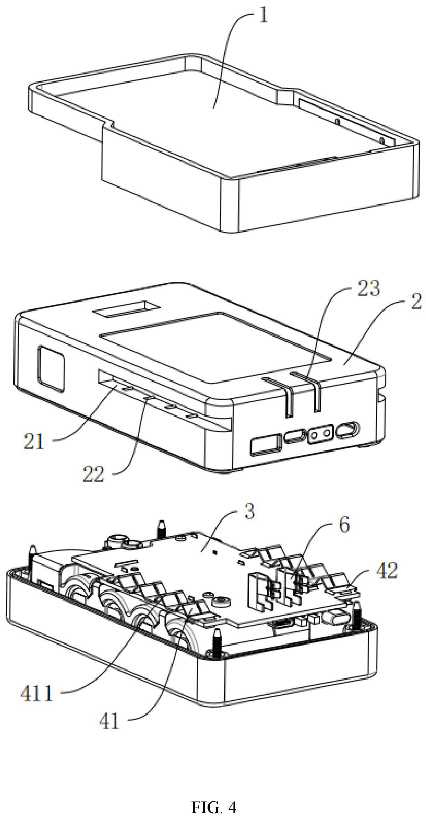

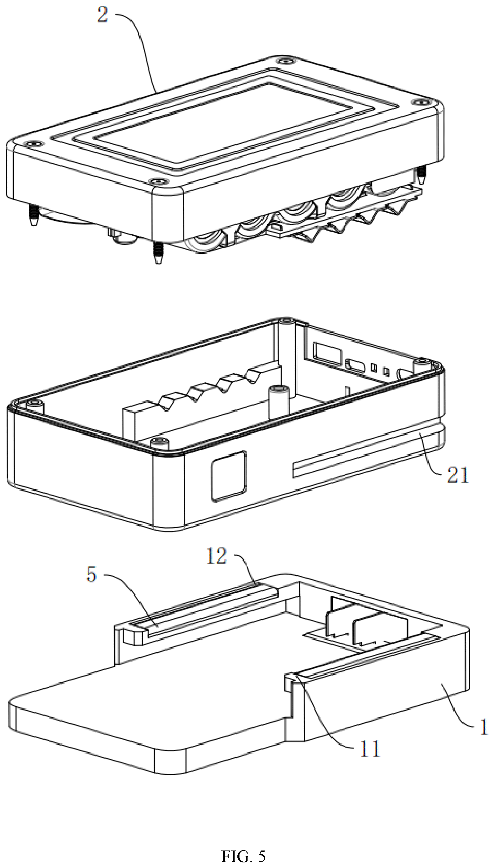

The difference between the present embodiment and Embodiment 1 lies in the different arrangement positions of the tool-side contact element 5 and the battery-side contact element 4. Referring to FIGS. 4 and 5, in the present embodiment, both the positive terminal 41 and the negative terminal 42 are arranged in a flat manner on the PCB 3 and symmetrically and fixedly connected to two sides of the PCB 3. Each contact point 411 on the positive terminal 41 and the negative terminal 42 is arranged toward one side of the device housing 1. The terminal slots 22 are defined on two sides of the battery pack housing 2 and located on the lower inner walls of the two chutes 21, and each contact point 411 extends and protrudes from each terminal slot 22.

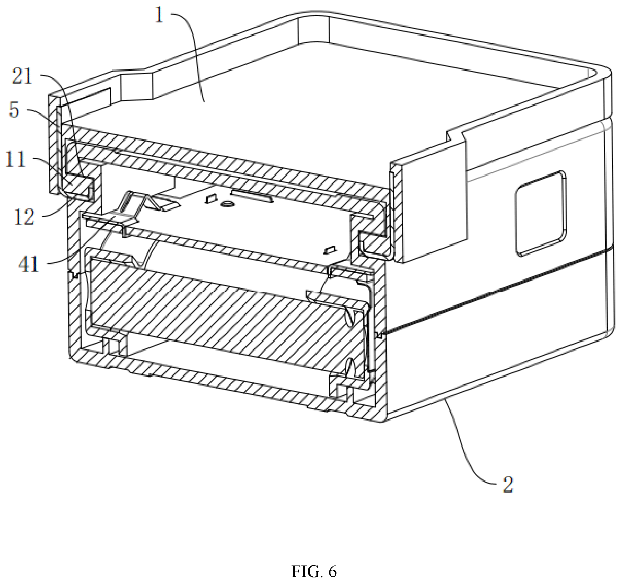

Referring to FIGS. 5 and 6, the mounting slots 12 on the two ribs 11 are respectively defined on the side close to the battery pack housing 2, and the two tool-side contact elements 5 are fixedly connected to the corresponding ribs 11 through the mounting slots 12, so as to be able to abut against the positive terminal 41/negative terminal 42.

The above are all preferred embodiments of the present application, and are not intended to limit the protection scope of the present application. Therefore, all equivalent changes made according to the structure, shape and principle of the present application shall be covered within the protection scope of the present application.

## Claims

1. A battery pack with multiple contact points for positive and negative terminals, **characterized by** comprising a battery pack housing (2) and battery-side contact elements (4), chutes (21) are defined on two side walls of the battery pack housing (2), and the battery-side contact elements (4) are located in the chutes (21).

2. The battery pack with multiple contact points for positive and negative terminals according to claim 1, **characterized in that** ribs (11) for insertion into the chutes (21) are arranged on a device housing (1) of a charging and discharging device, and tool-side contact elements (5) for cooperating with the battery-side contact elements (4) are arranged on the ribs (11).

3. The battery pack with multiple contact points for positive and negative terminals according to claim 2, **characterized in that** a printed circuit board (PCB) (3) for mounting the battery-side contact elements (4) is arranged in the battery pack housing (2), the battery-side contact elements (4) comprise positive terminals (41) and negative terminals (42) symmetrically arranged on two sides of the PCB (3), and a plurality of contact points (411) for abutting against the tool-side contact elements (5) are arranged on both the positive terminals (41) and the negative terminals (42).

4. The battery pack with multiple contact points for positive and negative terminals according to claim 3, **characterized in that** the positive terminals (41) and the negative terminals (42) are both vertically fixedly connected to the PCB (3), each of the contact points (411) is arranged at intervals in a length direction of the positive terminals (41) and the negative terminals (42), and each of the contact points (411) is arranged toward an outer side of the battery pack housing (2);
a plurality of terminal slots (22) are respectively defined at the two sides of the battery pack housing (2) on opposite inner walls of the two chutes (21), the terminal slots (22) are arranged in one-to-one correspondence with each of the contact points (411) and all communicate with an interior of the battery pack housing (2), and each of the contact points (411) on the positive terminals (41) and the negative terminals (42) extends and protrudes from each of the terminal slots (22); and
the two tool-side contact elements (5) are respectively arranged in a length direction of the two ribs (11) and respectively abut against each of the contact points (411) on the positive terminals (41) and the negative terminals (42).

5. The battery pack with multiple contact points for positive and negative terminals according to claim 4, **characterized in that** the ribs (11) are defined with mounting slots (12) for embedding the tool-side contact elements (5), and a side of the tool-side contact elements (5) close to the positive terminals (41) or the negative terminals (42) is flush with the ribs (11) for abutting against each of the contact points (411) on the positive terminals (41) or the negative terminals (42).

6. The battery pack with multiple contact points for positive and negative terminals according to claim 3, **characterized in that** the positive terminals (41) and the negative terminals (42) are both arranged in a flat manner and fixedly connected to the PCB (3), each of the contact points (411) is arranged at intervals in the length direction of the positive terminals (41) and the negative terminals (42), and the contact points (411) on the positive terminals (41) and the negative terminals (42) are all arranged toward one side of the device housing (1);
a plurality of terminal slots (22) communicating with the interior of the battery pack housing (2) are respectively defined at the two sides of the battery pack housing (2) with in the two chutes (21), each of the terminal slots (22) is arranged in one-to-one correspondence with each of the contact points (411), and each of the contact points (411) on the positive terminals (41) and the negative terminals (42) extends and protrudes from each of the terminal slots (22); and
the two tool-side contact elements (5) are respectively arranged in the length direction of the two ribs (11) and respectively abut against each of the contact points (411) on the positive terminals (41) and the negative terminals (42).

7. The battery pack with multiple contact points for positive and negative terminals according to claim 6, **characterized in that** the ribs (11) are defined with mounting slots (12) for mounting the tool-side contact elements (5) on a side close to the battery pack housing (2).

8. The battery pack with multiple contact points for positive and negative terminals according to claim 2, **characterized in that** the PCB (3) is provided with a signal terminal (6), and the battery pack housing (2) is defined with a through hole (23) for the signal terminal (6) to extend; and
the device housing (1) is provided with an identification insert (13) for cooperating with the signal terminal (6).
